# EUROPEAN PATENT APPLICATION

(11) **EP 4 560 800 A1**
(43) Date of publication of application: **28.05.2025**
(21) Application number: 22954619.7
(22) Date of filing: 12.08.2022
(51) Int. Cl.: H01M 50/188, H01M 50/147, H01M 50/172

(54) **END CAP ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: HUANG, Shoujun, Ningde, Fujian 352100 (CN); CHEN, Xinxiang, Ningde, Fujian 352100 (CN); ZHENG, Yulian, Ningde, Fujian 352100 (CN); LIN, Denghua, Ningde, Fujian 352100 (CN)
(74) Representative: Frick, Robert
(86) International application number: PCT/CN2022/112191
(87) International publication number: WO 2024/031660

(57) **Abstract**

Embodiments of the present application provide an end cover assembly, a battery cell, a battery, and an electrical device. The end cover assembly comprises an end cover, an electrode terminal, and a sealing member. The end cover is provided with a lead-out hole and is configured to seal an opening of a first housing. The electrode terminal at least partially passes through the lead-out hole, a sealing gap is formed between the electrode terminal and the end cover, the electrode terminal has a combination interface, and the combination interface is connected to the sealing gap at a junctional position. The sealing member is arranged in the sealing gap to seal the electrode terminal and the end cover. In a direction from the inside of the first housing to the outside of the first housing along the sealing gap, the sealing member comprises a sealing starting section located upstream of the junctional position, where the length of the sealing starting section is d, and the thickness of the sealing starting section is t, with d > t. In this way, the risk of an electrolyte flowing along the sealing gap from the inside of the first housing to the junctional position and corroding the combination interface to cause the electrode terminal to fracture at the combination interface is reduced, thereby prolonging the service life of the battery cell.

## Description

### TECHNICAL FIELD

The present application relates to the field of battery technology, and more specifically to an end cover assembly, a battery cell, a battery, and an electrical device.

### BACKGROUND

With the development of new energy technology, batteries are increasingly widely applied, such as in a mobile phone, a notebook computer, a battery car, an electric vehicle, an electric airplane, an electric boat, an electric toy car, an electric toy boat, an electric toy plane, an electric tool, and the like.

In battery technology, it is necessary to take into account both the safety and the service life of battery cells. Therefore, it is an urgent technical problem to be solved in the battery technology to prolong the service life of the battery cells.

### SUMMARY OF THE INVENTION

Embodiments of the present application provide an end cover assembly, a battery cell, a battery, and an electrical device, which can effectively prolong the service life of the battery cell.

In a first aspect, embodiments of the present application provide an end cover assembly, including an end cover, an electrode terminal, and a sealing member; the end cover provided with a lead-out hole and configured to close an opening of a first housing; the electrode terminal at least partially passing through the lead-out hole, a sealing gap formed between the electrode terminal and the end cover, the electrode terminal having a combination interface, and the combination interface connected to the sealing gap at a junctional position; the sealing member arranged in the sealing gap to seal the electrode terminal and the end cover; where in a direction from the inside of the first housing to the outside of the first housing along the sealing gap, the sealing member includes a sealing starting section located upstream of the junctional position, a length of the sealing starting section being d, and a thickness of the sealing starting section being t, with d > t.

In the above technical solution, the length of the sealing starting section is greater than the thickness of the sealing starting section, so that the sealing starting section located upstream of the junctional position is long, which reduces the risk of an electrolyte flowing along the sealing gap from the inside of the first housing to the junctional position and corroding the combination interface to cause the electrode terminal to fracture at the combination interface, thereby prolonging the service life of the end cover assembly and consequently prolonging the service life of the battery cell.

In some embodiments, the sealing member covers the junctional position. The sealing member is partially located upstream of the junctional position and partially located downstream of the junctional position, so that the sealing member provides a better sealing effect between the electrode terminal and the end cover, thereby improving the sealing performance between the electrode terminal and the end cover and reducing the risk of corrosion of the combination interface by the electrolyte.

In some embodiments, the sealing member is entirely located upstream of the junctional position in a direction from the inside of the first housing to the outside of the first housing along the sealing gap. The sealing member is the sealing starting section, which can effectively reduce the risk of corrosion of the combination interface by the electrolyte to cause fracture of the electrode terminal.

In some embodiments, the electrode terminal includes a first connection portion, a second connection portion, and a third connection portion, the second connection portion passing though the lead-out hole, and the second connection portion connected to the first connection portion and the third connection portion; the first connection portion and the third connection portion respectively located on either side of the end cover in a thickness direction, the first connection portion configured to face the inside of the first housing, a first gap formed between the first connection portion and the end cover, a second gap is formed between the second connection portion and the end cover, a third gap is formed between the third connection portion and the end cover, and the first gap and the third gap connected through the second gap to form a sealing gap. The second connection portion passes through the lead-out hole, and the first connection portion and the third connection portion are respectively located on either side of the end cover in the thickness direction, achieving installation of the electrode terminal on the end cover, so that the electrode terminal will not be separated from the end cover.

In some embodiments, the second connection portion and the first connection portion are made of different materials, and the second connection portion and the first connection portion are combined to form a combination interface, and the combination interface is connected to the first gap at a junctional position. The second connection portion is directly combined with the first connection portion, which allows a simple structure and can reduce the difficulty of combination.

In some embodiments, along the thickness direction of the end cover, a groove is provided on the side of the first connection portion facing the end cover; the second connection portion includes a combination portion accommodated in the groove, and an outer circumferential surface of the combination portion is combined with the groove side surface of the groove to form a combination interface. In this way, the combination portion of the second connection portion is accommodated in the groove, achieving positioning and mating of the first connection portion and the second connection portion, so that the contact area between the first connection portion and the second connection portion is increased, and the robustness of the combined first connection portion and second connection portion is improved.

In some embodiments, the sealing member is at least partially located in the first gap and covers the junctional position. In this way, the risk of corrosion of the combination interface by the electrolyte can be reduced.

In some embodiments, the sealing member includes a first sealing portion and a second sealing portion connected to each other, the first sealing portion is at least partially located in the first gap, the second sealing portion is at least partially located in the second gap, and the sealing starting section forms a part of the first sealing portion. The first sealing portion serves to seal the first connection portion and the end cover, and the second sealing portion serves to seal the second connection portion and the end cover, thereby improving the sealing performance between the electrode terminal and the end cover.

In some embodiments, the second connection portion includes a first section and a second section made of different materials, the first section and the second section are arranged along the thickness direction of the end cover, the first section is connected to the first connection portion, and the second section is connected to the third connection portion; along the thickness direction of the end cover, the end of the first section away from the first connection portion and the end of the second section away from the third connection portion are combined to form a combination interface, and the combination interface is connected to the second gap at a junctional position. In this way, the path for the electrolyte to flow along the sealing gap to the junctional position is increased, further reducing the risk of corrosion of the combination interface by the electrolyte.

In some embodiments, the combination interface is a plane, an arced surface, or a serrated surface. The combination interface being a plane can reduce the difficulty of combination between the first section and the second section; and the combination interface being an arced surface or a serrated surface can increase the contact area between the first section and the second section, improving the connection strength.

In some embodiments, the sealing member is at least partially located in the second gap and covers the junctional position. In this way, the risk of corrosion of the combination interface by the electrolyte can be reduced.

In some embodiments, the first section and the first connection portion are integrally formed; and/or the third connection portion is sleeved on an outer side of the second section. The first section and the first connection portion are integrally formed, so that the first section and the first connection portion have good integrity, improving the connection strength between the first section and the first connection portion. The third connection portion is sleeved on an outer side of the second section, so that the electrode terminal can be more conveniently installed on the end cover.

In some embodiments, the third connection portion includes a first sleeve portion and a second sleeve portion made of different materials, the first sleeve portion is sleeved on the outer side of the second connection portion, and the second sleeve portion is sleeved on the outer side of the first sleeve portion; where the inner circumferential surface of the second sleeve portion and the outer circumferential surface of the first sleeve portion are combined to form a combination interface, and the combination interface is connected to the third gap at a junctional position. In this way, the path for the electrolyte to flow along the sealing gap to the junctional position is increased, further reducing the risk of corrosion of the combination interface by the electrolyte.

In some embodiments, the sealing member is at least partially located in the third gap and covers the junctional position. In this way, the risk of corrosion of the combination interface by the electrolyte can be reduced.

In some embodiments, the sealing member is entirely located in the first gap and/or the second gap. In this way, the sealing member can be entirely located upstream of the junctional position.

In some embodiments, the second connection portion and the first connection portion are integrally formed. In this way, the second connection portion and the first connection portion have good integrity, and the connection strength between the second connection portion and the first connection portion is improved.

In some embodiments, the end cover assembly further includes a first insulation member and a second insulation member; the first insulation member is at least partially arranged in the first gap to insulate and isolate the first connection portion from the end cover; and the second insulation member is at least partially arranged in the third gap to insulate and isolate the third connection portion from the end cover. The first insulation member is at least partially arranged in the first gap to achieve insulation of the first connection portion from the end cover; and the second insulation member is at least partially arranged in the second gap to achieve insulation of the third connection portion from the end cover.

In some embodiments, the end cover is an integrally formed plate-like structure. The end cover has a simple structure and can be mated to a housing.

In some embodiments, the end cover includes a first cover body and a second cover body which are stacked, the lead-out hole passes through the first cover body and the second cover body, the first cover body is configured to close an opening of the first housing, and the second cover body is configured to close an opening of the second housing. The end cover of this structure can be mated to the two housings, so that the two housings can share one end cover assembly.

In some embodiments, the end cover further includes a third insulation member, the lead-out hole passes through the third insulation member, and the third insulation member is stacked between the first cover body and the second cover body to insulate and isolate the first cover body from the second cover body. The third insulation member enables insulation of the first cover body from the second cover body.

In a second aspect, embodiments of the present application provide a battery cell, including a first housing, a first electrode assembly, and an end cover assembly provided by any one of the embodiments of the first aspect; the first electrode assembly accommodated in the first housing; the electrode terminal electrically connected to the first electrode assembly, and the end cover closing an opening of the first housing.

In some embodiments, the battery cell further includes a second housing and a second electrode assembly, the second electrode assembly accommodated in the second housing, the electrode terminal electrically connected to the second electrode assembly; the end cover including a first cover body and a second cover body which are stacked, the lead-out hole passing through the first cover body and the second cover body, the first cover body configured to close the opening of the first housing, and the second cover body configured to close the opening of the second housing.

In some embodiments, the end cover further includes a third insulation member, the lead-out hole passes through the third insulation member, and the third insulation member is stacked between the first cover body and the second cover body to insulate and isolate the first cover body from the second cover body.

In a third aspect, embodiments of the present application provide a battery including the battery cell provided by any of the embodiments of the second aspect.

In a fourth aspect, embodiments of the present application provide an electrical device including the battery provided by any of the embodiments of the third aspect.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle provided by some embodiments of the present application;
FIG. 2 is an exploded view of a battery provided by some embodiments of the present application;
FIG. 3 is a schematic structural view of a battery cell provided by to some embodiments of the present application;
FIG. 4 is a schematic structural view of an end cover assembly provided by some embodiments of the present application;
FIG. 5 is a partial enlarged view at the end cover assembly A shown in FIG. 4;
FIG. 6 is a schematic structural view of the end cover assembly shown in FIG. 5 with the sealing member, the first insulation member, and the second insulation member removed;
FIG. 7 is a partial view of an end cover assembly provided by some embodiments of the present application;
FIG. 8 is a partial view of an end cover assembly provided by some other embodiments of the present application;
FIG. 9 is a partial view of an end cover assembly provided by yet some other embodiments of the present application;
FIG. 10 is a partial view of an end cover assembly provided by still some other embodiments of the present application;
FIG. 11 is a partial view of an end cover assembly provided by other embodiments of the present application;
FIG. 12 is a schematic structural view of an end cover assembly provided by some other embodiments of the present application;
FIG. 13 is a partial enlarged view at the end cover assembly B shown in FIG. 12; and
FIG. 14 is a schematic structural view of a battery cell according to some other embodiments of the present application.

Reference numerals:1-Housing; 1a-First housing; 1b-Second housing; 2-Electrode assembly; 2a-First electrode assembly; 2b-Second electrode assembly; 21-Positive tab; 22-Negative tab; 3-End cover assembly; 31-End cover; 311-Lead-out hole; 3111-Hole wall surface; 312-First surface; 313-Second surface; 314-First cover body; 315-Second cover body; 316-Third insulation member; 32-Electrode terminal; 321-Combination interface; 322-Junctional position; 323-First connection portion; 3231-Groove; 324-Second connection portion; 3241-Combination portion; 3241a-Stepped surface; 3242-First section; 3243-Second section; 325-Third connection portion; 3251-First sleeve portion; 3252-Second sleeve portion; 33-Sealing gap; 331-First gap; 332-Second gap; 333-Third gap; 34-Sealing member; 341-Sealing starting section; 342-First sealing portion; 343-Second sealing portion; 35-First insulation member; 36-Second insulation member; 10-Battery cell; 20-Box; 201-First part; 202-Second part; 100-Battery; 200-Controller; 300-Motor; 1000-Vehicle; Z-Thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may be of a wound structure or a stacked structure, and the embodiments of the present application are not limited thereto.

In a battery, in order to meet the demand for high current or high voltage, it is necessary to connect multiple battery cells inside the battery in series, in parallel, or in series-parallel connection. Currently, the electrode terminals of two battery cells are typically connected via the bus component to achieve the electrical connection between the two battery cells. After the electrode terminals of the battery cells are connected to the bus component, the electrode terminals can serve to connect the bus component and the tabs of the electrode assemblies. Since the bus component and the tab of the electrode assembly are generally made of different materials, in order to ensure the robustness of the electrode terminal welded to the bus component and the tab of the electrode assembly, the electrode terminal may be provided as a combined structure. The electrode terminal includes two parts of different materials which are combined together. The part of the electrode terminal of the same material as the tab can be welded to the tab, and the part of the electrode terminal of the same material as the bus component can be welded to the bus component.

In order to facilitate lead-out of the electrode terminal, a lead-out hole is provided on the end cover so that the electrode terminal can be led out through the lead-out hole. In order to ensure the sealing of the battery cell, it is necessary to provide a sealing member between the electrode terminal and the end cover to prevent the electrolyte from leaking to the outside of the battery cell through the lead-out hole.

The inventors have noticed that in a battery cell with an electrode terminal of a combined structure, when the battery cell is in a vibrating or impacting environment, the electrode terminal is prone to fracture at the combination interface between the two parts.

The inventors have further discovered that after the electrode terminal is passed through the lead-out hole of the end cover, a sealing gap is formed between the electrode terminal and the end cover, the sealing member is arranged in the sealing gap, and the combination interface of the electrode terminal is connected to the sealing gap at the junctional position. Although a sealing member is provided between the electrode terminal and the end cover, the sealing member is squeezed between the electrode terminal and the end cover, and the contact stress between the sealing member and the electrode terminal is not uniform. The closer the sealing member is to the inside of the battery cell along the sealing gap, the looser its contact with the electrode terminal. Moreover, the thicker the sealing member is, the longer the length of the part of the sealing member that is not in close contact with the electrode terminal. If the length of the part of the sealing member located upstream of the junctional position is insufficient, the electrolyte will flow along the small gap between the sealing member and the electrode terminal to the combination interface of the electrode terminal. The electrolyte will corrode the combination interface, causing the strength of the electrode terminal at the combination interface to decrease. When the battery cell is in a vibrating or impacting environment, the electrode terminal is prone to fracture at the combination interface between the two parts to cause a broken circuit in the battery cell, thereby affecting the service life of the battery cell.

In view of this, embodiments of the present application provide an end cover assembly, where the length of the sealing starting section upstream of the junctional position of the sealing member is provided to be greater than the thickness of the sealing starting section.

In such an end cover assembly, the length of the sealing starting section is greater than the thickness of the sealing starting section, so that the sealing starting section located upstream of the junctional position is long, and the greater the thickness of the sealing starting section, the longer the length of the sealing starting section, reducing the risk of the electrolyte flowing along the sealing gap from the inside of the first housing to the junctional position and corroding the combination interface to cause the electrode terminal to fracture at the combination interface, thereby prolonging the service life of the end cover assembly and consequently prolonging the service life of the battery cell.

The technical solutions described in embodiments of the present application are applicable to a battery and an electrical device using the battery.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

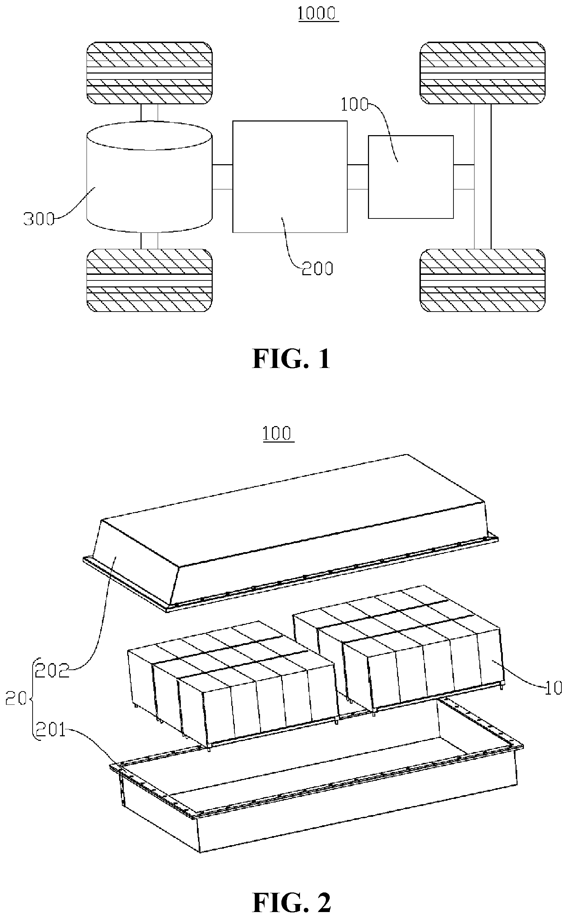

Referring to FIG. 1, which is a schematic structural view of a vehicle 1000 provided in some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some embodiments of the present application, the battery 100 can not only be used as the operating power source of the vehicle 1000, but also be used as a driving power source of the vehicle 1000 to replace or partially replace fuel or natural gas to provide driving power for the vehicle 1000.

Referring to FIG. 2, FIG. 2 is an exploded view of a battery 100 provided in some embodiments of the present application. The battery 100 may include a battery cell 10 and a box 20. The battery cell 10 is accommodated in the box 20.

The box 20 is a component for accommodating the battery cell 10, the box 20 provides an accommodating space for the battery cell 10, and the box 20 may be of various structures. In some embodiments, the box 20 may include a first part 201 and a second part 202. The first part 201 and the second part 202 are covered by each other to define the accommodating space for accommodating the battery cell 10. The first part 201 and the second part 202 may have a variety of shapes, such as a cuboid, a cylinder, etc. The first part 201 may be of a hollow structure with one side open, the second part 202 may also be of a hollow structure with one side open, and the open side of the second part 202 covers the open side of the first part 201, so as to form the box 20 having the accommodating space. It is also possible that the first part 201 may be of a hollow structure with one side open, the second part 202 may be a plate-like structure, and the second part 202 covers the open side of the first part 201, so as to form the box 20 having the accommodating space. The first part 201 and the second part 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. It is also possible that all the battery cells 10 are directly connected in series or in parallel or in series-parallel, and then an entirety composed of all the battery cells 10 is received in the box 20.

In some embodiments, the battery 100 further includes a bus component, and the plurality of battery cells 10 may be electrically connected to each other via the bus component, so as to implement series connection, parallel connection, or series-parallel connection of the plurality of battery cells 10. The bus component may be a metal conductor such as copper, iron, aluminum, stainless steel, an aluminum alloy, or the like.

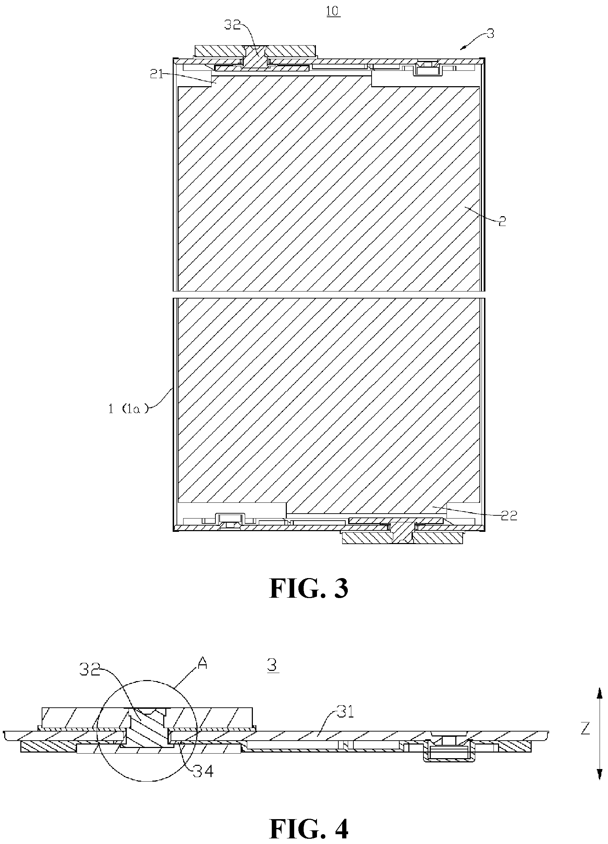

Referring to FIG. 3, FIG. 3 is a schematic structural view of a battery cell 10 provided in some embodiments of the present application. The battery cell 10 may include a housing 1, an electrode assembly 2, and an end cover assembly 3.

The housing 1 is a component for accommodating the electrode assembly 2, and the housing 1 may be a hollow structure with an opening formed at one end, and the housing 1 may alternatively be a hollow structure with openings formed at opposite ends. The housing 1 may be of a variety of shapes, such as a cylinder, a cuboid, or the like. The housing 1 may be made of various materials, such as copper, iron, aluminum, steel, an aluminum alloy, or the like.

The electrode assembly 2 is a component of the battery cell 10 where an electrochemical reaction occurs. The electrode assembly 2 may include a positive electrode plate, a negative electrode plate, and a separator. The electrode assembly 2 may be a wound structure formed by winding the positive electrode plate, the separator, and the negative electrode plate, or may be a laminated structure formed by a laminated arrangement of the positive electrode plate, the separator, and the negative electrode plate. The electrode assembly 2 has tabs, including a positive electrode tab 21 and a negative electrode tab 22. The positive electrode tab 21 may be a part of the positive electrode plate on which the positive electrode active material layer is not coated, and the negative electrode tab 22 may be a part of the negative electrode plate on which the negative electrode active material layer is not coated.

The end cover assembly 3 is a component that covers the opening of the housing 1 to isolate the internal environment of the battery cell 10 from the external environment. In the battery cell 10, there may be one end cover assembly 3 or two end cover assemblies 3. In the embodiment where the housing 1 is a hollow structure with an opening formed at one end, there may be one end cover assembly 3, and the one end cover assembly 3 correspondingly closes the one opening of the housing 1; and in the embodiment where the housing 1 is a hollow structure with openings formed at both ends, there may be two end cover assemblies 3, and the two end assemblies 3 respectively close the two openings of the housing 1. The end cover assembly 3 is provided with an electrode terminal 32 to be electrically connected to the tabs of the electrode assembly 2 so as to output or input electric energy. Taking the battery cell 10 provided with two end cover assemblies 3 as an example, the electrode terminal 32 of one end cover assembly 3 may be electrically connected to the positive tab 21 of the electrode assembly 2, and the electrode terminal 32 of the other end cover assembly 3 may be electrically connected to the negative tab 22 of the electrode assembly 2.

The specific structure of the end cover assembly 3 will be described in detail below with reference to the drawings.

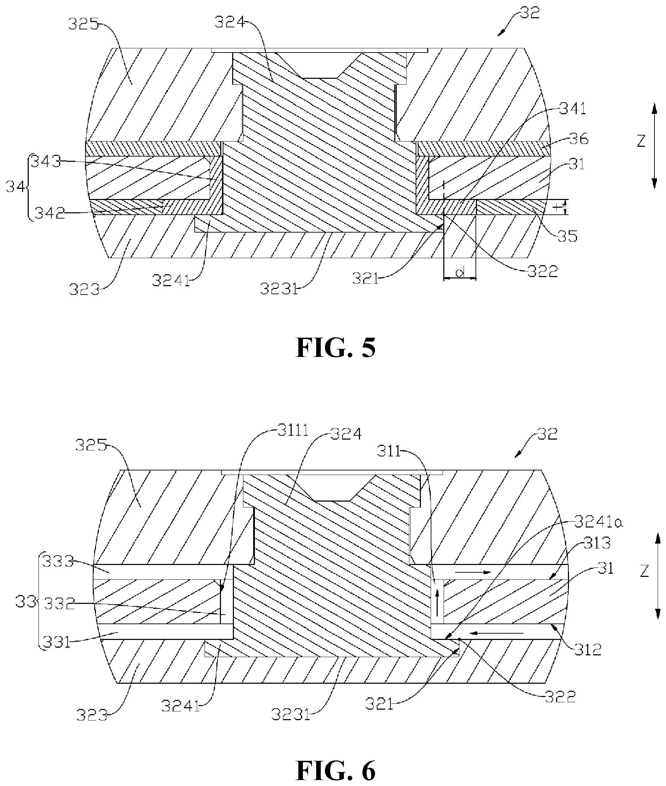

Referring to FIGS. 4 to 6, FIG. 4 is a schematic structural view of the end cover assembly 3 provided in some embodiments of the present application; FIG. 5 is a partial enlarged view at the end cover assembly 3 shown in FIG. 4; and FIG. 6 is a schematic structural view of the end cover assembly 3 shown in FIG. 5 with the sealing member 34, the first insulation member 35, and the second insulation member 36 removed. The embodiments of the present application provide an end cover assembly 3, including an end cover 31, an electrode terminal 32, and a sealing member 34. The end cover 31 is provided with a lead-out hole 311, and the end cover 31 is configured to close the opening of the first housing 1a (shown in FIG. 3). The electrode terminal 32 at least partially passes through the lead-out hole 311. A sealing gap 33 is formed between the electrode terminal 32 and the end cover 31. The electrode terminal 32 has a combination interface 321. The combination interface 321 is connected to the sealing gap 33 at a junctional position 322. The sealing member 34 is arranged in the sealing gap 33 to seal the electrode terminal 32 and the end cover 31. Among them, in the direction from the inside of the first housing 1a to the outside of the first housing 1a along the sealing gap 33, the sealing member 34 includes a sealing starting section 341 located upstream of the junctional position 322. The length of the sealing starting section 341 is d, and the thickness of the sealing starting section 341 is t, with d > t.

The end cover 31 is a component that closes the opening of the first housing 1a to isolate the internal environment of the battery cell 10 from the external environment. The end cover 31 may be of a single-layer structure or a multi-layer structure. The lead-out hole 311 is a through hole provided on the end cover 31 and is configured to lead out the electrode terminal 32 from the inner side of the end cover 31 to the outer side of the end cover 31. The inner side of the end cover 31 is the side of the end cover 31 facing the first housing 1a, and the outer side of the end cover 31 is the side of the end cover 31 away from the first housing 1a.

The electrode terminal 32 is a component configured to output or input electric energy, and the electrode terminal 32 is configured to be electrically connected to the tabs of the electrode assembly 2. The electrode terminal 32 may be partially located in the lead-out hole 311, or may be entirely located in the lead-out hole 311. For example, in FIG. 5, a part of the electrode terminal 32 is located in the lead-out hole 311, a part of the electrode terminal 32 is located on the inner side of the end cover 31 to facilitate electrical connection between the electrode terminal 32 and the tabs, and a part of the electrode terminal 32 is located on the outer side of the end cover 31 to facilitate connection between the electrode terminal 32 and an external component, such as a bus component.

The electrode terminal 32 has two parts made of different materials, which are combined together to form a combination interface 321 at the connection position. The two parts are fixed together after being combined, and the two can be combined together by friction welding. By way of example, one part is made of copper, and the other part is made of aluminum.

After the electrode terminal 32 is passed through the lead-out hole 311, a sealing gap 33 is formed between the electrode terminal 32 and the end cover 31. As shown in FIG. 6, along the thickness direction Z of the end cover 31, the end cover 31 has a first surface 312 and a second surface 313 opposite to each other, the lead-out hole 311 passes through the first surface 312 and the second surface 313, the first surface 312 faces the inside of the first housing 1a (shown in FIG.3), and the hole wall surface 3111 of the lead-out hole 311 connects the first surface 312 and the second surface 313. The first surface 312, the hole wall surface 3111, and the second surface 313 form a first contact surface of the end cover 31, the surface of the electrode terminal 32 opposite to the first contact surface is a second contact surface, and a sealing gap 33 is formed between the second contact surface and the first contact surface. If the electrode terminal 32 has only a surface opposite to the hole wall surface 3111, the sealing gap 33 is formed between this surface and the hole wall surface 3111; and if the electrode terminal 32 has a surface opposite to the first surface 312, the hole wall surface 3111, and the second surface 313, the sealing gap 33 is formed between this surface and the first contact surface.

The combination interface 321 is connected to the sealing gap 33 at the junctional position 322. It can be understood that the junctional position 322 is a position where the combination interface 321 intersects the second contact surface. For example, the surface of the electrode terminal 32 opposite to the second surface 313 is connected to the combination interface 321 at the junctional position 322; as another example, the surface of the electrode terminal 32 opposite to the hole wall surface 3111 is connected to the combination interface 321 at the junctional position 322; and as another example, as shown in FIG. 6, the surface of the electrode terminal 32 opposite to the first surface 312 is connected to the combination interface 321 at the junctional position 322.

In FIG. 6, for the convenience of description, the direction from the inside of the first housing 1a to the outside of the first housing 1a along the sealing gap 33 is defined as the first direction (the direction of the arrow in the sealing gap 33 in FIG. 6). The first direction can also be understood as the direction in which the electrolyte flows from the inside of the first housing 1a through the sealing gap 33 to the outside of the first housing 1a.

The sealing member 34 may be an elastomer having a compression modulus less than 1 GPa. The sealing member 34 may be made of plastic, rubber, or a mixture of plastic and rubber. Among them, the plastic may be Polypropylene (PP), Polyethylene (PE), Polyfluoroalkoxy (PFA), Polyethylene terephthalate (PET), Polybutylene terephthalate (PBT), Fluorinated ethylene propylene (FEP), or the like; and the rubber may be Nitrile Butadiene Rubber (NBR), Fluororubber (FKM), or the like.

The sealing starting section 341 is the part of the sealing member 34 located upstream of the junctional position 322 along the first direction. The sealing member 34 may be partially located upstream of the junctional position 322 or may be entirely located upstream of the junctional position 322. The length of the sealing starting section 341 is the length of the sealing starting section 341 extending along the first direction. The thickness of the sealing starting section 341 is perpendicular to the first direction. The thickness of the sealing starting section 341 can be measured along the width direction of the sealing gap 33. The thickness of the sealing starting section 341 may be uniform, or may be non-uniform. If the thickness of the sealing starting section 341 is non-uniform, the expression d > t is understood to mean that the length of the sealing starting section 341 is greater than the maximum thickness of the sealing starting section 341.

For a general end cover assembly 3, there is a situation where the length of the part of the sealing member 34 located upstream of the junctional position 322 is insufficient, which may cause the electrolyte to flow to the combination interface 321 of the electrode terminal 32. Taking the example where the two parts of the electrode terminal 32 to be combined together are respectively located at copper and aluminum, the two parts are combined to form a copper-aluminum combination interface. During charging, a small amount of lithium ions in the electrolyte will destroy the surface oxide film of the aluminum part of the electrode terminal 32 and be embedded into the gap of the aluminum metal crystal structure to form a loose Al-Li alloy, thereby corroding the combination interface 321 and reducing the strength of the combination position of the electrode terminal 32. In a vibrating or impacting environment, the electrode terminal 32 is prone to fracture at the combination interface 321, causing the battery cell 10 to be shortcircuited.

In embodiments of the present application, the length of the sealing starting section 341 is greater than the thickness of the sealing starting section 341, so that the sealing starting section 341 located upstream of the junctional position 322 is long, and the greater the thickness of the sealing starting section 341, the longer the length of the sealing starting section 341, improving the sealing capacity of the sealing starting section 341 and reducing the risk of the electrolyte flowing from the inside of the first housing 1a along the sealing gap 33 to the junctional position 322 and corroding the combination interface 321 to cause the electrode terminal 32 to fracture at the combination interface 321, thereby prolonging the service life of the end cover assembly 3 and consequently prolonging the service life of the battery cell 10.

In some embodiments, referring to FIG. 5, the sealing member 34 covers the junctional position 322.

In this embodiment, the sealing starting section 341 is a part of the sealing member 34. The sealing starting section 341 is located upstream of the junctional position 322, and the part of the sealing member 34 other than the sealing starting section 341 is located downstream of the junctional position 322.

In this embodiment, the sealing member 34 covers the junctional position 322, so that a part of the sealing member 34 is located upstream of the junctional position 322 and a part of the sealing member 34 is located downstream of the junctional position 322. The sealing member 34 has a better sealing effect between the electrode terminal 32 and the end cover, thereby improving the sealing performance between the electrode terminal 32 and the end cover 31. As the sealing member 34 occupies the space of the sealing gap 33 at the junctional position 322, the electrolyte is unlikely to accumulate in large quantities at the junctional position 322 even if the sealing at the sealing starting section 341 fails, thereby reducing the risk of corrosion of the combination interface 321 by the electrolyte.

In some embodiments, the sealing member 34 is entirely located upstream of the junctional position 322 in a direction from the inside of the first housing 1a to the outside the first housing 1a along the sealing gap 33. The sealing member 34 is the sealing starting section 341, which can effectively reduce the risk of corrosion of the combination interface 321 by the electrolyte to cause fracture of the electrode terminal 32.

In some embodiments, with continued reference to FIGS. 5 and 6, the electrode terminal 32 includes a first connection portion 323, a second connection portion 324, and a third connection portion 325, the second connection portion 324 passes through the lead-out hole 311, and the second connection portion 324 is connected to the first connection portion 323 and the third connection portion 325. The first connection portion 323 and the third connection portion 325 are respectively located on either side of the end cover 31 in the thickness direction Z. The first connection portion 323 is configured to face the inside of the first housing 1a. A first gap 331 is formed between the first connection portion 323 and the end cover 31, a second gap 332 is formed between the second connection portion 324 and the end cover 31, and a third gap 333 is formed between the third connection portion 325 and the end cover 31. The first gap 331 and the third gap 333 are connected through the second gap 332 to form the sealing gap 33.

The first connection portion 323 and the second connection portion 324 are connected to form an inverted T-shaped structure, and the third connection portion 325 and the second connection portion 324 are connected to form a T-shaped structure. The second connection portion 324 may be a columnar structure passing through the lead-out hole 311, and the first connection portion 323 and the third connection portion 325 may be a plate-like structure. When the end cover 31 closes the opening of the first housing 1a, the first connection portion 323 faces the inside of the first housing 1a, the first connection portion 323 is located on the inner side of the end cover 31, and the second connection portion 324 is located on the outer side of the end cover 31. In the direction from the inside of the first housing 1a to the outside of the first housing 1a along the sealing gap 33, the first gap 331, the second gap 332, and the third gap 333 are communicated in sequence. The first gap 331 is formed between the first surface 312 and the surface of the first connection portion 323 facing the end cover 31, the second gap 332 is formed between the hole wall surface 3111 of the lead-out hole 311 and the outer circumferential surface of the second connection portion 324, and the third gap 333 is formed between the second surface 313 and the surface of the third connection portion 325 facing the end cover 31. Among them, the second gap 332 is the space of the lead-out hole 311 that is not occupied by the second connection portion 324.

The combination interface 321 and the first gap 331 may be connected at the junctional position 322, or alternatively, the combination interface 321 and the second gap 332 may be connected at the junctional position 322, or alternatively, the combination interface 321 and the third gap 333 may be connected at the junctional position 322. The first connection portion 323 may be divided into two parts, and the combination interface 321 is formed at the connection position of the two parts; or alternatively, the combination interface 321 may be formed at the connection position of the first connection portion 323 and the second connection portion 324; or alternatively, the second connection portion 324 may be divided into two parts, and the combination interface 321 is formed at the connection position of the two parts; or alternatively, the combination interface 321 may be formed at the connection position of the second connection portion 324 and the third connection portion 325; or alternatively, the third connection portion 325 may be divided into two parts, and the combination interface 321 is formed at the connection position of the two parts.

In this embodiment, the second connection portion 324 passes through the lead-out hole 311, and the first connection portion 323 and the third connection portion 325 are respectively located on either side of the end cover 31 in the thickness direction Z, achieving installation of the electrode terminal 32 on the end cover 31, so that the electrode terminal 32 will not be separated from the end cover 31.

In some embodiments, with continued reference to FIGS. 5 and 6, the second connection portion 324 and the first connection portion 323 are made of different materials, and the second connection portion 324 and the first connection portion 323 are combined to form a combination interface 321, and the combination interface 321 is connected to the first gap 331 at the junctional position 322.

For example, one of the second connection portion 324 and the first connection portion 323 may be made of copper, and the other may be made of aluminum.

The material of the third connection portion 325 is the same as that of the second connection portion 324. The third connection portion 325 and the second connection portion 324 may be integrally formed, or may be provided separately and connected together. For example, as shown in FIGS. 5 and 6, the third connection portion 325 is sleeved on the outer side of the second connection portion 324, and the third connection portion 325 is provided with a mounting hole, and the second connection portion 324 partially passes through the mounting hole. By way of example, the mounting hole is a stepped hole, the part of the second connection portion 324 located in the mounting hole is a T-shaped structure, and the second connection portion 324 is mated to the mounting hole to restrain the third connection portion 325 from being separated from the second connection portion 324 in a direction away from the end cover 31.

The combination interface 321 is formed at the connection position between the second connection portion 324 and the first connection portion 323. The end surface at the end of the second connection portion 324 away from the third connection portion 325 and the surface of the first connection portion 323 facing the end cover 31 may be combined to form the combination interface 321. In this case, the combination interface 321 is perpendicular to the thickness direction Z of the end cover 31. Or alternatively, as shown in FIGS. 5 and 6, the second connection portion 324 may partially extend into the first connection portion 323. In this case, the combination interface 321 is parallel to the thickness direction Z of the end cover 31.

Since the sealing starting section 341 is located upstream of the junctional position 322, it can be understood that the sealing starting section 341 is located in the first gap 331.

In this embodiment, the second connection portion 324 is directly combined with the first connection portion 323, which enables a simple structure and can reduce the difficulty of combination.

In some embodiments, with continued reference to FIGS. 5 and 6, along the thickness direction Z of the end cover 31, a groove 3231 is provided on the side of the first connection portion 323 facing the end cover 31. The second connection portion 324 includes a combination portion 3241 accommodated in the groove 3231, and the outer circumferential surface of the combination portion 3241 is combined with a groove side surface of the groove 3231 to form a combination interface 321.

The combination portion 3241 is the part of the second connection portion 324 located in the groove 3231. The combination portion 3241 and the groove 3231 may both be cylindrical. Along the thickness direction Z of the end cover 31, the groove 323 1 is recessed from the surface of the first connection portion 323 facing the end cover 31 toward a direction away from the end cover 31, and the combination portion 3241 has a stepped surface 3241a facing the end cover 31, and the stepped surface 3241a is flush with the surface of the first connection portion 323 facing the end cover 31, and the connection position between the stepped surface 3241a and the surface of the first connection portion 323 facing the end cover 31 is the junctional position 322.

The combination portion 3241 of the second connection portion 324 is accommodated in the groove 3231, so that the first connection portion 323 and the second connection portion 324 are positioned and mated, the contact area between the first connection portion 323 and the second connection portion 324 is increased, and the robustness of the combined first connection portion 323 and second connection portion 324 is improved.

In some embodiments, with continued reference to FIGS. 5 and 6, the sealing member 34 is at least partially located in the first gap 331 and covers the junctional position 322.

The sealing member 34 may be entirely located in the first gap 331, so that the sealing member 34 covers the junctional position 322; or alternatively, a part of the sealing member 34 may be located in the first gap 331, and the part of the sealing member 34 located in the first gap 331 covers the junctional position 322.

In this embodiment, the sealing member 34 is at least partially located in the first gap 331 and covers the junctional position 322, which can reduce the risk of corrosion of the combination interface 321 by the electrolyte.

In some embodiments, with continued reference to FIGS. 5 and 6, the sealing member 34 includes a first sealing portion 342 and a second sealing portion 343 connected to each other, the first sealing portion 342 is at least partially located in the first gap 331, the second sealing portion 343 is at least partially located in the second gap 332, and the sealing starting section 341 forms a part of the first sealing portion 342.

The first sealing portion 342 and the second sealing portion 343 may be annular structures sleeved on the outer side of the second connection portion 324. The first sealing portion 342 and the second sealing portion 343 may be coaxially arranged. The inner diameter of the first sealing portion 342 is equal to that of the second sealing portion 343, and the outer diameter of the first sealing portion 342 is larger than that of the second sealing portion 343. The first sealing portion 342 and the second sealing portion 343 may be integrally formed.

The sealing starting section 341 is a part of the first sealing portion 342. The part of the first sealing portion 342 other than the sealing starting section 341 is connected to the second sealing portion 343. The first sealing portion 342 covers the junctional position 322.

In this embodiment, the first sealing portion 342 serves to seal the first connection portion 323 and the end cover 31, and the second sealing portion 343 serves to seal the second connection portion 324 and the end cover 31, thereby improving the sealing performance between the electrode terminal 32 and the end cover 31.

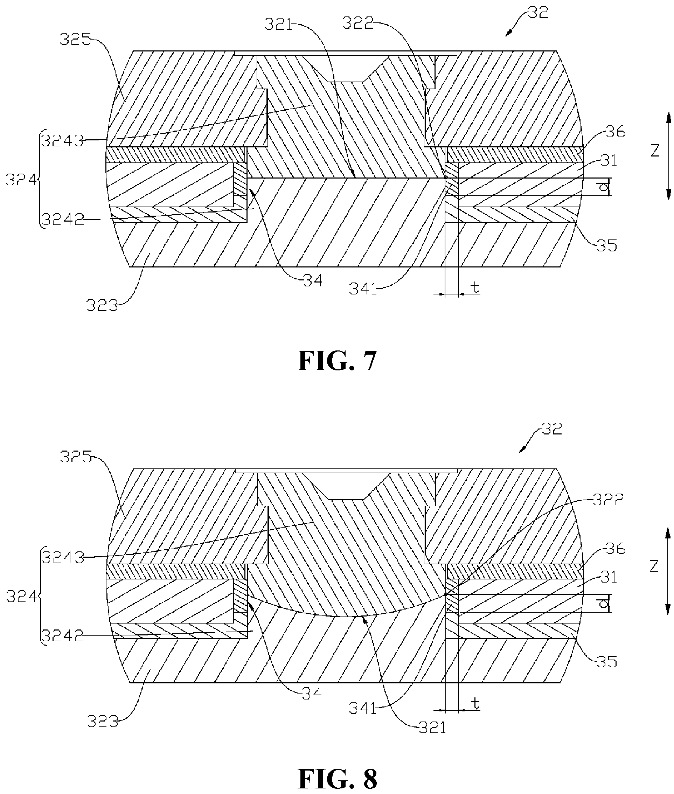

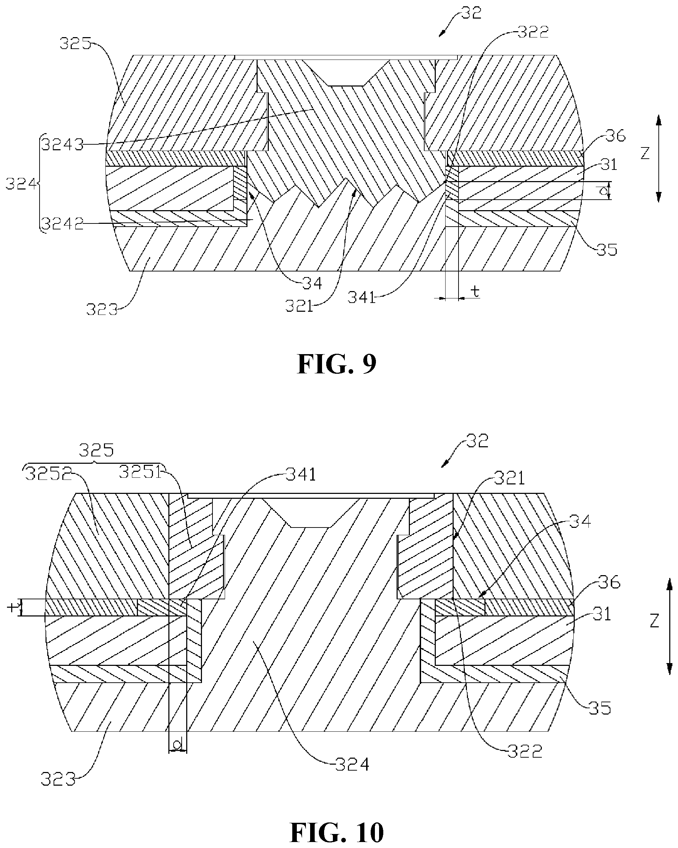

In some embodiments, referring to FIGS. 7 to 9, FIG. 7 is a partial view of the end cover assembly 3 provided in some embodiments of the present application; FIG. 8 is a partial view of the end cover assembly 3 provided in some other embodiments of the present application; and FIG. 9 is a partial view of the end cover assembly 3 provided in yet some other embodiments of the present application. The second connection portion 324 includes a first section 3242 and a second section 3243 made of different materials. The first section 3242 and the second section 3243 are arranged along the thickness direction Z of the end cover 31. The first section 3242 is connected to the first connection portion 323, and the second section 3243 is connected to the third connection portion 325. Along the thickness direction Z of the end cover 31, the end of the first section 3242 away from the first connection portion 323 and the end of the second section 3243 away from the third connection portion 325 are combined to form the combination interface 321, and the combination interface 321 is connected to the second gap 332 at the junctional position 322.

The first section 3242 and the second section 3243 are two parts of the second connection portion 324 made of different materials, and the two parts are combined to form the combination interface 321. By way of example, one of the first section 3242 and the second section 3243 may be made of copper, and the other may be made of aluminum. The first connection portion 323 and the first section 3242 are made of the same material, and the third connection portion 325 and the second section 3243 are made of the same material.

The combination interface 321 is located in the lead-out hole 311 and is connected to the outer circumferential surface of the first section 3242 and the outer circumferential surface of the second section 3243 at the junctional position 322, so that the combination interface 321 is connected to the second gap 332 at the junctional position 322. The sealing starting section 341 may be located entirely in the second gap 332; or alternatively, a part of the sealing starting section 341 may be located in the second gap 332 and another part of the sealing starting section 341 may be located in the first gap 331. In this case, the length of the sealing starting section 341 is equal to the sum of the length of the part of the sealing starting section 341 located in the second gap 332 and the length of the part of the sealing starting section 341 located in the first gap 331. When measuring the length of the part of the sealing starting section 341 located in the first gap 331, the measurement can be performed along a direction parallel to the first surface 312 of the end cover 31; and when measuring the length of the part of the sealing starting section 341 located in the second gap 332, the measurement can be performed along a direction parallel to the hole wall surface 3111 of the lead-out hole 311.

In this embodiment, the combination interface 321 is connected to the second gap 332 at the junctional position 322. The electrolyte in the first housing 1a needs to pass through the first gap 331 to enter the second gap 332, thereby increasing the path for the electrolyte to flow along the sealing gap 33 to the junctional position 322, and further reducing the risk of corrosion of the combination interface 321 by the electrolyte.

In some embodiments, referring to FIG. 7, the combination interface 321 is a plane.

Along the thickness direction Z of the end cover 31, the end surface at the end of the first section 3242 away from the first connection portion 323 is a plane, and the end surface at the end of the second section 3243 away from the third connection portion 325 is also a plane, and the two planes are combined to form the combination interface 321.

In this embodiment, the combination interface 321 is a plane, which can reduce the difficulty of combination of the first section 3242 and the second section 3243.

In some embodiments, referring to FIG. 8, the combination interface 321 is an arced surface.

Along the thickness direction Z of the end cover 31, the end surface at the end of the first section 3242 away from the first connection portion 323 is an arced surface, the end surface at the end of the second section 3243 away from the third connection portion 325 is also an arced surface, the two arced surfaces have shapes that can be mated to each other, and the two arced surfaces are combined to form the combination interface 321.

In this embodiment, the combination interface 321 is an arced surface, which can increase the contact area between the two combined parts of the electrode terminal 32 and improve the connection strength.

In some embodiments, as shown in FIG. 9, the combination interface 321 is a serrated surface.

Along the thickness direction Z of the end cover 31, the end surface at the end of the first section 3242 away from the first connection portion 323 is a serrated surface, the end surface at the end of the second section 3243 away from the third connection portion 325 is also a serrated surface, the two serrated surfaces have shapes that can be mated to each other, and the two serrated surfaces are combined to form the combination interface 321.

In this embodiment, the combination interface 321 is a serrated surface, which can increase the contact area between the two combined parts of the electrode terminal 32 and improve the connection strength.

In some embodiments, referring to FIGS. 7 to 9, the sealing member 34 is at least partially located in the second gap 332 and covers the junctional position 322.

The sealing member 34 may be entirely located in the second gap 332, so that the sealing member 34 covers the junctional position 322; or alternatively, a part of the sealing member 34 may be located in the second gap 332, and the part of the sealing member 34 located in the second sealing gap 33 covers the junctional position 322. When a part of the sealing member 34 is located in the second gap 332, another part of the sealing member 34 may be located in the first gap 331 and/or the third gap 333.

In this embodiment, the sealing member 34 is at least partially located in the second gap 332 and covers the junctional position 322, which can reduce the risk of corrosion of the combination interface 321 by the electrolyte.

In some embodiments, referring to FIGS. 7 to 9, the first section 3242 and the first connection portion 323 are integrally formed; and/or the third connection portion 325 is sleeved on the outer side of the second section 3243.

The first end and the first connection portion 323 are integrally formed to form an inverted T-shaped structure. The third connection portion 325 is sleeved on the outer side of the second section 3243 to form a T-shaped structure. The third connection portion 325 is provided with a mounting hole, and the second section 3243 partially passes through the mounting hole. By way of example, the mounting hole is a stepped hole, the part of the second section 3243 located in the mounting hole is a T-shaped structure, and the second section 3243 is mated to the mounting hole to restrain the third connection portion 325 from being separated from the second section 3243 in a direction away from the end cover 31.

The first section 3242 and the first connection portion 323 are integrally formed, so that the first section 3242 and the first connection portion 323 have good integrity, improving the connection strength between the first section 3242 and the first connection portion 323. The third connection portion 325 is sleeved on the outer side of the second section 3243, so that the electrode terminal 32 can be more conveniently installed on the end cover 31.

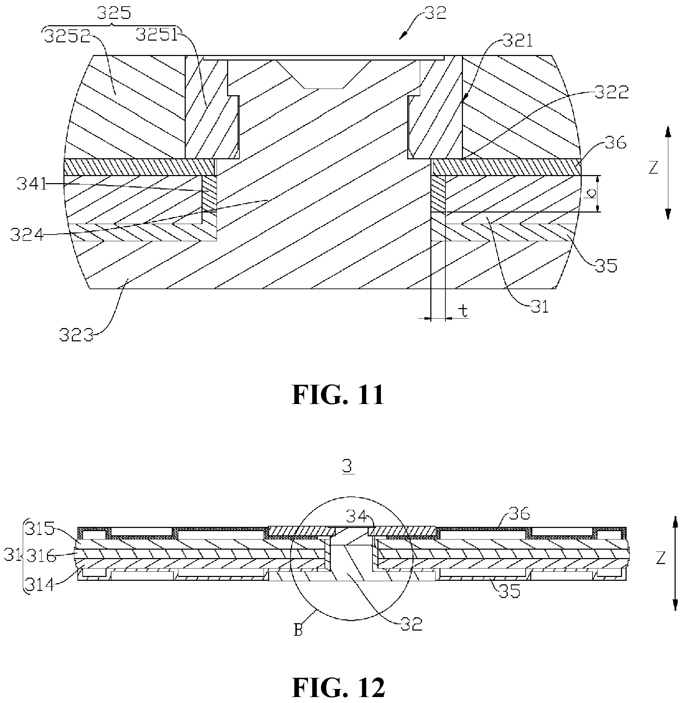

In some embodiments, referring to FIGS. 10 and 11, FIG. 10 is a partial view of the end cover assembly 3 provided in yet some embodiments of the present application; and FIG. 11 is a partial view of the end cover assembly 3 provided in other embodiments of the present application. The third connection portion 325 includes a first sleeve portion 3251 and a second sleeve portion 3252 made of different materials, the first sleeve portion 3251 is sleeved on the outer side of the second connection portion 324, and the second sleeve portion 3252 is sleeved on the outer side of the first sleeve portion 3251; where the inner circumferential surface of the second sleeve portion 3252 and the outer circumferential surface of the first sleeve portion 3251 are combined to form the combination interface 321, and the combination interface 321 is connected to the third gap 333 at the junctional position 322.

The first sleeve portion 3251 and the second sleeve portion 3252 are two parts of different materials of the third connection portion 325. The inner circumferential surface of the second sleeve portion 3252 and the outer circumferential surface of the first sleeve portion 3251 are combined to form the combination interface 321. The combination interface 321 is connected to the surface of the first sleeve portion 3251 facing the end cover 31 and the surface of the second sleeve portion 3252 facing the end cover 31 at the junctional position 322. By way of example, the first sleeve portion 3251 and the second sleeve portion 3252 are both annular structures, the inner circumferential surface of the second sleeve portion 3252 and the outer circumferential surface of the first sleeve portion 3251 are both cylindrical, and the combination interface 321 is a cylindrical surface parallel to the thickness direction Z of the end cover 31. One of the first sleeve portion 3251 and the second sleeve portion 3252 may be made of copper, and the other may be made of aluminum. The first sleeve portion 3251, the second connection portion 324, and the first connection portion 323 are made of the same material. The second connection portion 324 and the first connection portion 323 may be integrally formed, or may be provided separately and connected together.

Among them, the first sleeve portion 3251 is provided with a mounting hole, and the second connection portion 324 passes through the mounting hole. By way of example, the mounting hole is a stepped hole, the part of the second connection portion 324 located in the mounting hole is a T-shaped structure, and the second connection portion 324 is mated to the mounting hole to restrain the first sleeve portion 3251 from being separated from the second connection portion 324 in a direction away from the end cover 31.

In this embodiment, the combination interface 321 is connected to the third gap 333 at the junctional position 322. The electrolyte in the first housing 1a needs to pass through the first gap 331 and the second gap 332 to enter the third gap 333, thereby increasing the path for the electrolyte to flow along the sealing gap 33 to the junctional position 322, and further reducing the risk of corrosion of the combination interface 321 by the electrolyte.

In some embodiments, referring to FIG. 10, the sealing member 34 is at least partially located in the third gap 333 and covers the junctional position 322.

The sealing member 34 may be entirely located in the third gap 333, so that the sealing member 34 covers the junctional position 322. Alternatively, a part of the sealing member 34 may be located in the third gap 333, and the part of the sealing member 34 located in the third gap 333 covers the junctional position 322. For example, a part of the sealing member 34 may be located in the third gap 333, a part of the sealing member 34 may be located in the second gap 332, and another part of the sealing member 34 may be located in the first gap 331. By way of example, in FIG. 10, the sealing member 34 is entirely located in the third gap 333.

In this embodiment, the sealing member 34 is at least partially located in the third gap 333 and covers the junctional position 322, which can reduce the risk of corrosion of the combination interface 321 by the electrolyte.

In some embodiments, the sealing member 34 is entirely located in the first gap 331 and/or the second gap 332. The sealing member 34 is entirely located upstream of the junctional position 322.

If the sealing member 34 is entirely located in the first gap 331 and the second gap 332, it can be understood that a part of the sealing member 34 is located in the first gap 331, and another part of the sealing member 34 is located in the second gap 332.

By way of example, as shown in FIG. 11, the sealing member 34 is entirely located in the second gap 332.

In some embodiments, referring to FIGS. 10 and 11, the second connection portion 324 and the first connection portion 323 are integrally formed. In this way, the second connection portion 324 and the first connection portion 323 have good integrity, and the connection strength between the second connection portion 324 and the first connection portion 323 is improved.

In some embodiments, referring to FIGS. 5 to 11, the end cover assembly 3 further includes a first insulation member 35 and a second insulation member 36. The first insulation member 35 is at least partially arranged in the first gap 331 to insulate and isolate the first connection portion 323 from the end cover 31. The second insulation member 36 is at least partially arranged in the third gap 333 to insulate and isolate the third connection portion 325 from the end cover 31.

The first insulation member 35 and the second insulation member 36 are both made of insulating materials, such as rubber, plastic, and the like. The first insulation member 35 serves to insulate the first connection portion 323 from the end cover 31, and the second insulation member 36 serves to insulate the third connection portion 325 from the end cover 31. By way of example, the sealing member 34 abuts against the first insulation member 35 and the second insulation member 36.

In this embodiment, the first connection portion 323 can be insulated from the end cover 31 by the first insulation member 35, and the third connection portion 325 can be insulated from the end cover 31 by the second insulation member 36, so as to reduce the risk of short circuit.

In some embodiments, referring to FIGS. 5 to 11, the end cover 31 is an integrally formed plate-like structure.

It can be understood that the end cover 31 is of a single-layer structure.

In this embodiment, the end cover 31 has a simple structure, and the end cover 31 of this structure can be mated to a housing 1.

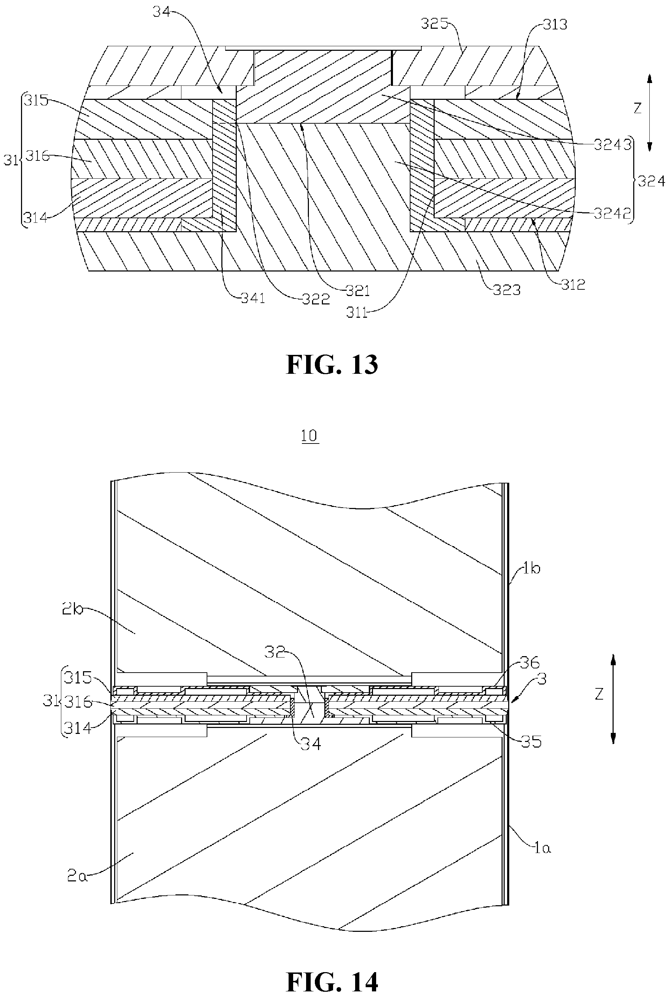

In some embodiments, referring to FIGS. 12 and 13, FIG. 12 is a schematic structural view of an end cover assembly 3 provided in some other embodiments of the present application; and FIG. 13 is a partial enlarged view at the end cover assembly 3 shown in FIG. 12. The end cover 31 includes a first cover body 314 and a second cover body 315 which are stacked, the lead-out hole 311 passes through the first cover body 314 and the second cover body 315, the first cover body 314 is configured to close an opening of the first housing 1a, and the second cover body 315 is configured to close an opening of the second housing 1b.

In this embodiment, the end cover 31 is of a multi-layer structure. The first cover body 314 is a component that closes the opening of the first housing 1a, and the second cover body 315 is a component that closes the opening of the second housing 1b. Along the thickness direction Z of the end cover 31, the surface of the first cover body 314 away from the second cover body 315 is the first surface 312, the surface of the second cover body 315 away from the first cover body 314 is the second surface 313, and the lead-out hole 311 passes through the first surface 312 and the second surface 313. A part of the lead-out hole 311 is located at the first cover body 314 and passes through the first cover body 314, and another part of the lead-out hole 311 is located at the second cover body 315 and passes through the second cover body 315.

In this embodiment, the end cover 31 of this structure can be mated to the two housings 1, so that the two housings 1 share one end cover assembly 3.

In some embodiments, with continued reference to FIGS. 12 and 13, the end cover 31 further includes a third insulation member 316, the lead-out hole 311 passes through the third insulation member 316, and the third insulation member 316 is stacked between the first cover body 314 and the second cover body 315 to insulate and isolate the first cover body 314 from the second cover body 315.

The third insulation member 316 is made of an insulating material, and the first cover body 314 can be insulated from the second cover body 315 by the third insulation member 316. The first cover body 314, the third insulation member 316, and the second cover body 315 are stacked in sequence. A part of the lead-out hole 311 is located at the first cover body 314 and passes through the first cover body 314, another part of the lead-out hole 311 is located at the second cover body 315 and passes through the second cover body 315, and yet another part of the lead-out hole 311 is located at the third insulation member 316 and passes through the third insulation member 316.

Embodiments of the present application provide a battery cell 10, including a first housing 1a, a first electrode assembly 2a, and the end cover assembly 3 provided in any one of the above embodiments. The first electrode assembly 2a is accommodated in the first housing 1a. The electrode terminal 32 is electrically connected to the first electrode assembly 2a, and the end cover 31 closes the opening of the first housing 1a.

In some embodiments, referring to FIG. 14, which is a schematic structural view of a battery cell 10 provided in some other embodiments of the present application. The battery cell 10 further includes a second housing 1b and a second electrode assembly 2b. The second electrode assembly 2b is accommodated in the second housing 1b, and the electrode terminal 32 is electrically connected to the second electrode assembly 2b. The end cover 31 includes a first cover body 314 and a second cover body 315 which are stacked, the lead-out hole 311 passes through the first cover body 314 and the second cover body 315, the first cover body 314 is configured to close an opening of the first housing 1a, and the second cover body 315 is configured to close an opening of the second housing 1b.

**The electrode terminal 32 connects the first electrode assembly 2a and the second electrode assembly 2b to achieve electrical connection between the first electrode assembly 2a and the second electrode assembly 2b. The positive tab 21 of the first electrode assembly 2a and the negative tab 22 of the second electrode assembly 2b may be connected via the electrode terminal 32 to achieve the series connection between the first electrode assembly 2a and the second electrode assembly 2b.**

**In the embodiment where the end cover assembly 3 is provided with the first insulation member 35 and the second insulation member 36, the first insulation member 35 may also be configured to insulate and isolate the first cover body 314 from the first electrode assembly 2a, and the second insulation member 36 may also be configured to insulate and isolate the second cover body 315 from the second electrode assembly 2b.**

In the battery cell 10 of the above structure, the electrical connection between the two electrode assemblies 2 is achieved by one end cover assembly 3, which occupies a small space, thereby improving the energy density of the battery 100.

In some embodiments, the end cover 31 further includes a third insulation member 316, the lead-out hole 311 passes through the third insulation member 316, and the third insulation member 316 is stacked between the first cover body 314 and the second cover body 315 to insulate and isolate the first cover body 314 from the second cover body 315.

Embodiments of the present application provide a battery 100 including the battery cell 10 provided in any one of the above embodiments.

Embodiments of the present application provide an electrical device including the battery 100 provided in any one of the above embodiments.

It is to be noted that, embodiments in the present application and features in the embodiments may be combined with each other provided that there is no conflict.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. An end cover assembly, comprising:
an end cover provided with a lead-out hole and configured to close an opening of a first housing;
an electrode terminal at least partially passing through the lead-out hole, with a sealing gap formed between the electrode terminal and the end cover, the electrode terminal having a combination interface, and the combination interface being connected to the sealing gap at a junctional position; and
a sealing member arranged in the sealing gap to seal the electrode terminal and the end cover;
Wherein in a direction from the inside of the first housing to the outside of the first housing along the sealing gap, the sealing member comprises a sealing starting section located upstream of the junctional position, the length of the sealing starting section being d, and the thickness of the sealing starting section being t, with d > t.

2. The end cover assembly according to claim 1, wherein the sealing member covers the junctional position.

3. The end cover assembly according to claim 1, wherein in the direction from the inside of the first housing to the outside of the first housing along the sealing gap, the sealing member is entirely located upstream of the junctional position.

4. The end cover assembly according to any one of claims 1 to 3, wherein the electrode terminal comprises a first connection portion, a second connection portion, and a third connection portion, the second connection portion passes through the lead-out hole, and the second connection portion is connected to the first connection portion and the third connection portion;
the first connection portion and the third connection portion are respectively located on either side of the end cover in the thickness direction, the first connection portion is configured to face the inside of the first housing, a first gap is formed between the first connection portion and the end cover, a second gap is formed between the second connection portion and the end cover, a third gap is formed between the third connection portion and the end cover, and the first gap and the third gap are connected through the second gap to form the sealing gap.

5. The end cover assembly according to claim 4, wherein the second connection portion and the first connection portion are made of different materials, and the second connection portion and the first connection portion are combined to form the combination interface, and the combination interface is connected to the first gap at the junctional position.

6. The end cover assembly according to claim 5, wherein along the thickness direction of the end cover, a groove is provided on the side of the first connection portion facing the end cover;
the second connection portion comprises a combination portion accommodated in the groove, and an outer circumferential surface of the combination portion is combined with a groove side surface of the groove to form the combination interface.

7. The end cover assembly according to claim 5 or 6, wherein the sealing member is at least partially located in the first gap and covers the junctional position.

8. The end cover assembly according to any one of claims 5 to 7, wherein the sealing member comprises a first sealing portion and a second sealing portion connected to each other, the first sealing portion is at least partially located in the first gap, the second sealing portion is at least partially located in the second gap, and the sealing starting section forms a part of the first sealing portion.

9. The end cover assembly according to claim 4, wherein the second connection portion comprises a first section and a second section made of different materials, the first section and the second section are arranged along the thickness direction of the end cover, the first section is connected to the first connection portion, and the second section is connected to the third connection portion;
along the thickness direction of the end cover, the end of the first section away from the first connection portion and the end of the second section away from the third connection portion are combined to form the combination interface, and the combination interface is connected to the second gap at the junctional position.

10. The end cover assembly according to claim 9, wherein the combination interface is a plane, an arced surface, or a serrated surface.

11. The end cover assembly according to claim 9 or 10, wherein the sealing member is at least partially located in the second gap and covers the junctional position.

12. The end cover assembly according to any one of claims 9 to 11, wherein the first section and the first connection portion are integrally formed; and/or the third connection portion is sleeved on an outer side of the second section.

13. The end cover assembly according to claim 4, wherein the third connection portion comprises a first sleeve portion and a second sleeve portion made of different materials, the first sleeve portion is sleeved on an outer side of the second connection portion, and the second sleeve portion is sleeved on an outer side of the first sleeve portion; and
wherein an inner circumferential surface of the second sleeve portion and an outer circumferential surface of the first sleeve portion are combined to form the combination interface, and the combination interface is connected to the third gap at the junctional position.

14. The end cover assembly according to claim 13, wherein the sealing member is at least partially located in the third gap and covers the junctional position.

15. The end cover assembly according to claim 13, wherein the sealing member is entirely located in the first gap and/or the second gap.

16. The end cover assembly according to any one of claims 13 to 15, wherein the second connection portion and the first connection portion are integrally formed.

17. The end cover assembly according to any one of claims 4 to 16, wherein the end cover assembly further comprises a first insulation member and a second insulation member;
the first insulation member is at least partially arranged in the first gap to insulate and isolate the first connection portion from the end cover; and
the second insulation member is at least partially arranged in the third gap to insulate and isolate the third connection portion from the end cover.

18. The end cover assembly according to any one of claims 1 to 17, wherein the end cover is an integrally formed plate-like structure.

19. The end cover assembly according to any one of claims 1 to 17, wherein the end cover comprises a first cover body and a second cover body which are stacked, the lead-out hole passes through the first cover body and the second cover body, the first cover body is configured to close an opening of the first housing, and the second cover body is configured to close an opening of the second housing.

20. The end cover assembly according to claim 19, wherein the end cover further comprises a third insulation member, the lead-out hole passes through the third insulation member, and the third insulation member is stacked between the first cover body and the second cover body to insulate and isolate the first cover body from the second cover body.

21. A battery cell, comprising:
a first housing;
a first electrode assembly accommodated in the first housing; and
the end cover assembly according to any one of claims 1 to 18, the electrode terminal electrically connected to the first electrode assembly, and the end cover closing the opening of the first housing.

22. The battery cell according to claim 21, wherein the battery cell further comprises a second housing and a second electrode assembly, the second electrode assembly accommodated in the second housing, and the electrode terminal electrically connected to the second electrode assembly; and
the end cover comprises a first cover body and a second cover body which are stacked, the lead-out hole passes through the first cover body and the second cover body, the first cover body is configured to close the opening of the first housing, and the second cover body is configured to close the opening of the second housing.

23. The battery cell according to claim 22, wherein the end cover further comprises a third insulation member, the lead-out hole passes through the third insulation member, and the third insulation member is stacked between the first cover body and the second cover body to insulate and isolate the first cover body from the second cover body.

24. A battery comprising the battery cell according to any one of claims 21 to 23.

25. An electrical device comprising the battery according to claim 24.
